# EUROPEAN PATENT SPECIFICATION

(11) **EP 0 289 596 B1**
(45) Date of publication and mention of the grant of the patent: **18.09.1996**
(21) Application number: 88900619.3
(22) Date of filing: 12.11.1987
(51) Int. Cl.: H01M 10/34

(54) **Method of producing a sealed lead/sulfuric acid recombinant storage battery**
Herstellungsverfahren einer versiegelten schwefelsaüre-Bleibatterie mit Gasrekombination
Méthode de production d'une batterie de plomb/acide sulfurique scellée et récombinante

(30) Priority: 12.11.1986 US 929648
(43) Date of publication of application: 09.11.1988
(73) Proprietor: HOLLINGSWORTH & VOSE COMPANY, East Walpole, MA 02032 (US)
(72) Inventor: BADGER, John, P., Genoa, OH 43430 (US)
(74) Representative: König, Werner, Dipl.-Ing.
(86) International application number: US8702941
(87) International publication number: WO8803710

(56) References cited:
- EP-A- 0 141 568
- WO-A-81/03397
- DE-B- 1 047 274
- FR-A- 1 368 769
- GB-A- 2 069 021
- GB-A- 2 156 576
- JP-A-55 146 872
- US-A- 3 532 557
- US-A- 4 053 695
- US-A- 4 216 280
- US-A- 4 245 013
- US-A- 4 359 511
- US-A- 4 367 271
- US-A- 4 529 677
- PATENT ABSTRACTS OF JAPAN, vol. 11, no. 294 (E-544)[2741], 22nd September 1987; & JP-A-62 93 856
- PATENT ABSTRACTS OF JAPAN, vol. 11, no. 292 (E-543)[2739], 19th September 1987; & JP-A-62 90 848
- NASA TECH BRIEF; L.H. THALLER: "Electrolyte reservoir would lengthen cell life"

## Description

### Field of Invention

The invention pertains to a method for producing a sealed lead/sulfuric acid recombinant storage battery comprising a plurality of lead electrodes in a case, a fibrous sheet plate separator which is inert to sulfuric acid electrolyte and of substantially uniform hydrophobicity between adjacent ones of said electrodes, and a body of a sulfuric acid electrolyte absorbed by each of said separators and maintained in contact with each of the adjacent ones of said electrodes, each of said separator sheets consisting essentially of first fibers which are inert to aqueous sulfuric acid electrolyte, and have an absorbency greater than 90 percent relative to aqueous sulfuric acid electrolyte when surfactant free and second fibers which are inert to aqueous sulfuric acid electrolyte and have a given absorbency less than 80 percent relative to sulfuric acid electrolyte when surfactant free, the first and second fibers being present in such proportions that the sheet has an absorbency of from 75 to 95 percent relative to sulfuric acid electrolyte when surfactant free.

### Definitions

Subsequently herein, the term "percent v/v" means percent by volume; the term "percent w/w" means percent by weight; all temperatures are in °C.; and the following abbreviations have the meanings indicated: µm means micrometer or micrometers (numerically equal to micron or microns); mg=milligram or milligrams; g=gram or grams; kg=kilogram or kilograms; l=liter or liters; ml=milliliter or milliliters; and cm=centimeter or centimeters.

### The Prior Art

Recombinant batteries have been known for a number of years, being disclosed, for example, in U.S. patent No. 3,362,861. This patent also discloses such batteries having vent valves through which gases which form in service can escape to prevent the build-up of an excessive internal pressure. U.S. Patent No. 3,159,508 discloses a battery including a container designed to prevent an undue build-up of hydrogen pressure. This container is made from a material which exhibits substantially increased permeability to hydrogen without a corresponding increase in permeability to oxygen.

Recombinant battery plate separators made from glass fibers of a plurality of diameters and made from mixtures of glass fibers and polypropylene fibers are also known. For example, U.S. patent No. 4,465,748 discloses glass fiber sheet material for use as a separator in an electrochemical cell, e.g., in such a battery, and made from 5 to 35 percent by weight of glass fibers less than 1 µm in diameter; the patent also discloses a glass fiber sheet for such use wherein there are fibers of a continuous range of fiber diameters and lengths, and most of the fibers are not over 5 mm in length. U.S. patent No. 4,216,280 discloses glass fiber sheet material for use as a plate separator in such a battery, and made from 50 to 95 percent by weight of glass fibers less than 1 µm in diameter and 50 to 5 percent by weight of coarser glass fibers. The coarser glass fibers have a fiber diameter larger than 5 µm, preferably larger than 10 µm, and it is advantageous for some of the coarser fibers to have diameters of 10 µm to 30 µm. U.S. patent No. 4,373,015 discloses sheet material for use as a separator in such a battery, and "comprising organic polymeric fibers"; both of the examples of the reference describe the sheet material as "short staple fiber polyester matting about 0.3 mm thick", and indicate that the polyester fibers range from about 1 µm to about 6 µm in diameter. Finally, sheet separators for use in conventional (non-recombinant) batteries and comprising both glass fibers and organic fibers are disclosed in all of the following U.S. patents: No. 4,529,677, No. 4,363,856, No. 4,359,511. No. 4,367,271 discloses storage battery separators composed of acrylic fibrils in an amount of up to about 10 percent by weight, balance glass fibers. Japanese patent document 55/146,872 discloses a separator material comprising glass fibers (50-85 percent by weight) and organic fibers (50-15 percent by weight). U.S. patent No. 4.245,013 discloses a separator made by overlaying a first sheet of fibrous material including polyethylene fibers with a second sheet of fibrous material including polyethylene and having a synthetic pulp content higher than the first sheet. So far as is known, there has not heretofore been a suggestion of a plate separator which, when saturated with electrolyte, leaves a residuum of unfilled voids through which a gas can transfer from one plate to another because the separator is not capable of holding an amount of electrolyte which is sufficient to fill all the voids.

U.S. patent No. 4,216,280 discloses separators for storage batteries, particularly separators for sealed lead-acid storage batteries, which comprise glass fibers entangled in the shape of a sheet without the use of a binder, with a first portion being glass fibers having a fiber diameter smaller than one µm and a second portion being glass fibers having a fiber diameter larger than 5 µm.

JP 55 146 872 discloses an organic electrolyte battery having Li as cathode active material, a separator of mixed material of both 50-85 % w/w and 50-15 % ww polypropylene or polyethylene. This separator is interposed between the anodic mixed agent and cathodic agent. The liquid retentivity is given as 60-76 %.

Further WO 81/03397 discloses battery separators for maintenance-free lead-acid batteries. From 10 to 90 % w/w of the fiber content of the battery separator is comprised of a nonmetallic acicular mineral. With this known battery separators forced electrolyte removal by blotting is tested. In the light of the prior art considered it is the main object of the instant invention to provide a method for producing a sealed lead/sulfuric acid recombinant storage battery which simply allows the flooding of the battery.

### Summary of the Invention

With a method as outlined at the beginning of this specification the above object is met in that the battery is filled with an unmeasured quantity of electrolyte sufficient to cover the electrodes, that the electrolyte not absorbed by the sheet separators, the plates, and other internal surfaces wetted by the electrolyte is removed and that finally the case is closed.

According to a further embodiment of the invention the method may provide that only a portion of the electrolyte that is not absorbed is removed by the step of removing electrolyte from the case, and that the case is closed containing electrolyte that is absorbed by the separator sheets and a sump of electrolyte that is not absorbed. According to a further embodiment of the invention the methods may provide that all of the electrolyte that is not absorbed by the separator sheets is removed by the step of removing electrolyte from the case, thereafter a small quantity of the electrolyte is introduced into the case and the case is closed containing electrolyte that is absorbed by the separator sheets and a sump of electrolyte that is not absorbed.

When a sump of electrolyte is built this latter can be relatively small or relatively large, which is preferred depending upon the service for which the battery is intended. According to a further embodiment of the invention the method may provide that the case is partially evacuated before the electrolyte is introduced thereinto. This is usually desirable to increase the rate at which the cells are filled.

According to a further embodiment of the invention the method may provide that it additionally includes a step of forming the battery after the electrolyte is introduced into the case to cover the electrodes and before the electrolyte not absorbed by the sheet separators is removed from the case.

### Description of the Preferred Embodiments

The invention will be more fully understood from the following examples, which are presented solely for the purpose of illustrating and disclosing, and are not to be construed as limiting.

### Example 1

A fibrous sheet plate separator material was produced from 5 parts Grade 210 glass fibers, 2 parts Grade 206 glass fibers, 1 part Grade A-20BC chopped glass strand, 0.7 part Grade A-121 polyethylene fibers and approximately 0.06 part sulfuric acid, specific gravity 1.835, to lower the pH of a slurry that is produced to about 3. The glass fibers used are all commercially available; the grade 206 and the grade 210 fibers are marketed for use in producing battery separators. They are made from an acid resistant borosilicate glass. The grade 206 fibers have a surface area of 1.80 m² per g, a fiber diameter of 0.85 µm. The grade 210 fibers have a surface area of 0.47 m² per g, a fiber diameter of 3.25 µm. The polyethylene fibers used are commercially available. They have an average length from 0.6 to 1.2 mm, maximum 2.0, and an average diameter from 10 to 20 µm. The glass and polyethylene fibers, the sulfuric acid and about 250 parts water were charged to a paper-making pulper, and the charge was beat for about 5 minutes to disperse the fibers without causing breakage. The resulting dispersion was diluted with about 250 parts water, and the diluted dispersion was then pumped to a chest at the head of a Fourdrinier paper making machine and flowed onto the screen of the machine to produce a separator material having a basis weight of 200 g per m².

A Group 26 battery was built with 13 plates per cell consisting of 7 negative plates and 6 positive plates having cast grids containing approximately 0.4 percent tin and 0.07 percent calcium, balance lead. Each plate was 142.875 mm (5.625 inches) wide and 120.650 mm (4.75 inches) tall. The positive plates were 1.448 mm (0.057 inches) thick, while the negative plates were 1.295 mm (0.051 inches) thick. Sheets or separator materials produced as described above, 266.7 mm (10.5 inches) long and 158.0 mm (6.22 inches) wide, were folded around the positive plates so that the fold was at the bottom of the plate, leaving separator material extending about 12.7 mm (½ inches) above the positive plates and about 7.6 mm (0.3 inches) beyond each side of the positive plates. Each stack of 13 plates with the separator material between adjacent plates was inserted into a cell having a rib-to-rib dimension of 30.074 mm (1.184 inches), so that each layer of separator material was compressed to 1.016 mm (0.040 inches) between plates. The assembly was completed by making the intercell commections and sealing a cover on the battery container. The cells were filled with a sulfuric acid electrolyte to a level about one inch above the tops of the plates. The electrolyte was made by adding 15 g/l sodium sulfate to sulfuric acid which had a specific gravity of 1.235. The battery was then formed; excess electrolyte was dumped; and the battery was sealed.

### Example 2

A battery was produced by the procedure of Example 1, except that the charge to the pulper was 5.5 parts Grade 210 glass fibers, 3.5 parts Grade 206 glass fibers, 1 part A-20BC chopped glass strand, 0.06 part sulfuric acid and 250 parts water.

### Example 3

A battery was produced by the procedure of Example 2, except that negative plates having expanded metal grids were used.

For purposes of comparison, but not according to the instant invention, a control battery was produced by the procedure of Example 1, except that the charge to the pulper was 5 parts Grade 210 glass fibers, 2.5 parts Grade 206 glass fibers, 0.06 part sulfuric acid and 250 parts water.

Average values were determined for batteries produced by the foregoing procedures of dry battery weight in g, drained battery weight in g, acid retained in g, acid absorbed by plates in g, acid retained by separators in ml, total separator volume in ml (calculated from the known dimensions), separator void volume in ml (calculated from the total separator volume and the calculated volumes of the fibers in the separator material) and percent v/v unfilled voids in the separator. These average values are set forth in the following table.

| | Example Number | | | |
|---|---|---|---|---|
| | 1 | 2 | 3 | Control |
| Dry Battery weight | 11,716 | 11,716 | 10,957 | 11,736 |
| Drained Battery weight | 14,414 | 14,335 | 13,977 | 15,107 |
| Acid Retained | 2,794 | 2,618 | 3,020 | 3,371 |
| Acid Absorbed by Plates | 1,141 | 1,143 | 1,243 | 1,232 |
| Acid retained by Separators | 1,272 | 1,165 | 1,377 | 1,600 |
| Total Separator volume | 1,648 | 1,666 | 1,652 | 1,678 |
| Separator void volume | 1,523 | 1,533 | 1,527 | 1,540 |
| Percent v/v unfilled voids | 16.5 | 24.0 | 10.5 | 0.0 |

Referring to the foregoing table, the term "absorbency", as used herein and in the appended claims, is expressed in percent, is determined by the procedure described above, and is 100 minus the percent v/v unfilled voids.

Batteries produced as described in Example 1 have been field tested in automotive service. They perform satisfactorily without excessive venting of gas, and without excessive pressure build up, indicating that oxygen formed at the positive plates is able to migrate through the separators to the negative plates for electrolytic recombination. Batteries produced by the control method, however, have been found to be unsatisfactory. There is an excessive pressure build-up, requiring that gas be vented and indicating that oxygen is not able to migrate through the separators to the negative plates. Actual test data from field testing of batteries produced as described in Example 1 indicate that they can be used with computer controlled alternators which, in normal operation, subject the battery to high current charging during braking; although there may be some gas build-up as a consequence of such charging, excessive pressures should not develop, and recombination should occur quickly once the high current charging ceases. Batteries according to the invention can be operated in any position and can be built in many shapes that were not feasible with conventional batteries. There is significantly less explosion hazard with batteries according to the invention than with conventional batteries that are not recombinant.

Batteries produced as described in Examples 1, 2 and 3 and control batteries have been tested to compare the rates at which oxygen gas released at the positive plates was recombined at the negative plates. The test involved charging electrolyte-flooded, six-cell batteries for 16 hours at a constant voltage of 13.8 volts. During charging, a water bath was used to maintain the battery temperatures at 11°. The charging current was measured at the end of the 16 hour charging period. The majority of the free electrolyte in the batteries was then drained quickly, leaving only the small amount of unabsorbed electrolyte that was trapped within cavities in the cover and wetting the surfaces of the internal cell parts. The drained batteries were then sealed, fitted with pressure relief valves and again charged for 16 hours at 13.8 volts and 11°. The charging current was also determined at the end of the second 16 hours of charging. The term "Recombination Current" is subsequently used herein to mean the charging current at the end of the second 16 hours of charging minus that at the end of the first 16 hours of charging. The Recombination Current is related to the sum of the rate at which oxygen gas is being released at the positive plates and the rate at which oxygen gas is being recombined at the negative plates. Average values of Recombination Current are given in the following table for batteries produced as described in Examples 1-3 and for control batteries.

| | Recombination Current, milliamperes |
|---|---|
| Example 1 | 87 |
| Example 2 | 99 |
| Example 3 | 92 |
| Control | -7 |

The test described above for determining Recombination Current and the data in the foregoing table give a qualitative indication that batteries produced in accordance with the instant invention exhibit far better recombination performance than the Control battery. However, that test does not take into account the effect of the partial pressure of oxygen on recombination. Accordingly, an additional test was performed on the batteries produced in accordance with the foregoing examples to provide a more nearly quantitative measure of the performance of the batteries in terms of recombination. It has been observed that the rate of recombination of oxygen in a battery is a direct function of oxygen partial pressure -in the battery case.

In accordance with the test, a charging voltage is applied to a fully charged battery while a stream of nitrogen is caused to flow therethrough in contact with the plates, separator and electrolyte. The current drawn by the battery is measured. The stream of nitrogen virtually precludes recombination because oxygen must be available in order for recombination to occur. When the partial pressure of oxygen in a battery case drops to zero, so does the rate of recombination.

After the current drawn by the battery under the flow of nitrogen is measured, the nitrogen stream is replaced with air and the charging voltage is again applied to the battery, and the current drawn by the battery is measured again. The difference between the two measurements is referred to hereafter as the "Recombining Current". A Recombining Current of zero occurs when oxygen is not being recombined. Five batteries produced in accordance with the procedure of Example 2 were found to have an average Recombining Current of 138 milliamperes.

### Examples 4a and 4b

Batteries were produced by the procedure of Example 1, except that the charge to the pulper was 386 kg of a mixture comprising 64 percent Grade 210 glass fibers, 26 percent Grade 206 glass fibers, 5 percent A-20BC chopped glass strand and 5 percent A-121 polypropylene fibers, 22,609 kg of water, and sulfuric acid in an amount sufficient to lower the pH of the charge to approximately 2.6. In the case of Example 4a, the basis weight of the separator material was 220 g per m² and in the case of Example 4b, the basis weight of the separator material was 200 g per m².

Values were determined for two batteries produced by the procedure of Example 4 of dry battery weight in g, drained battery weight in g, acid retained in g, acid absorbed by plates in g, acid retained by separators in ml, total separator volume in ml (calculated from the known dimensions), separator void volume in ml (calculated from the total separator volume and the calculated volumes of the fibers in the separator material) and percent v/v unfilled voids in the separator. These values are set forth in the following table.

| | Example 4a | Number 4b |
|---|---|---|
| Dry Battery weight | 11,757 | 11,741 |
| Drained Battery weight | 14,617 | 14,564 |
| Acid Retained | 2,860 | 2,823 |
| Acid Absorbed by Plates | 1,061 | 1,062 |
| Acid retained by Separators | 1,410 | 1,380 |
| Total Separator volume | 1,680 | 1,674 |
| Separator void volume | 1,532 | 1,540 |
| Percent v/v unfilled voids | 8.0 | 10.4 |

The Recombining Current was determined for batteries produced as described in Examples 4a and 4b at several different electrolyte volumes. Just before these determinations were made, the batteries were refilled with electrolyte so that the plates in each cell were submerged; the excess electrolyte was then dumped, and a first determination of the Recombining Current was made. Next, several additions of electrolyte were made to each battery, and second and subsequent determinations of Recombining Current were made, one after each addition. It will be appreciated that the first determinations of Recombining Current were made when the plates and the separator materials were saturated with electrolyte and that the second and subsequent determinations were made when there was excess electrolyte beyond that required to saturate the plates and the separator materials. The Recombining Current for each of these tests is set forth in the following table, together with the amount (if any) of electrolyte added after the excess was first dumped:

| | RECOMBINING CURRENT (milliamperes) | |
|---|---|---|
| Electrolyte added to Each Cell (ml) | Battery of Example 4a | Battery of Example 4b |
| 0 | 549 | 498 |
| 10 | 226 | - |
| 20 | 124 | - |
| 25 | - | 160 |
| 30 | 64 | - |
| 40 | 8 | - |
| 50 | 3* | 11 |
| 75 | - | -7* |

| | | |
|---|---|---|
| *Since the test is accurate to only about ± 4 milliamperes, these values probably should be considered to be zero. | | |

The batteries of Examples 4a and 4b exhibited recombining currents of 549 and 498 milliamperes, respectively, after they were filled with electrolyte so that the plates were submerged and the excess electrolyte was dumped. They continued to exhibit substantial recombining currents even after the electrolyte level was increased beyond the amount that the plates and the separators could hold.

For purposes of comparison, but not in accordance with the instant invention, Recombining Current was measured on several batteries, some made from separator material which is currently in commercial use, and some that are commercially available recombinant batteries. The purpose of the test was to evaluate the necessity for using what McClelland et al. calls a "starved amount" of electrolyte in recombinant batteries containing conventional separator material. In some cases the batteries tested contained separator material composed of 65 percent of Grade 210 fibers and 35 percent of Grade 206 fibers; in other cases the batteries were commercially available, made with separator material which is believed to have been composed of 60 to 65 percent of Grade 210 fibers and 35 to 40 percent of Grade 206 fibers. All of the batteries tested contained a conventional sulfuric acid electrolyte containing about 1 percent of sodium sulfate. The amount of electrolyte in the batteries varied from 87.9 to 100 percent of the amount required to fill the voids in the plates and the separators. The amount of electrolyte required to fill the voids was calculated from available data about the absorptiveness of the separator material and the plates. In other words, at 100 percent, the separator material and the plates were saturated but there was no excess electrolyte in the cells of the battery. The data concerning electrolyte levels and recombining currents is set forth below:

| ELECTROLYTE LEVEL | RECOMBINING CURRENT |
|---|---|
| percent v/v of plate and separator saturation | milliamperes |
| 100 | 0 |
| 98.4 | 88 |
| 97.2 | 229 |
| 94.9 | 760 |
| 92.6 | 749 |
| 90.2 | 1078 |
| 87.9 | 1591 |

The data in the table above demonstrates that the quantity of electrolyte in each cell of a recombinant battery with conventional separator material is critical with respect to the rate of recombination. Indeed, as the quantity of electrolyte in each cell of such a battery approaches 100 percent of the amount which would saturate the separator material and the plates, the rate of recombination approaches zero. In contrast, as shown by the data set forth in respect of the batteries produced in accordance with the procedure of Example 4, recombination occurs at a relatively rapid rate even when the electrolyte level in each cell exceeds the amount corresponding with 100 percent saturation of the plates and the separator material.

The excessive pressure build-up of control batteries can be relieved by vents of the kind disclosed by McClelland et al. or, according to another aspect of the instant invention, by assembling the battery so that a comparatively thin film of polyethylene, polypropylene, or the like is the only closure for an opening through the case. Such a film, because polyethylene and polypropylene are pervious to hydrogen to a much greater extent than they are pervious to oxygen, enables the preferential release of hydrogen from the interior of the battery, discharging the battery. This preferential release of hydrogen continues until an electrochemical balance is reached, after which time the excessive release of hydrogen, oxygen or both stops. It has been found that a vent opening having an area of 65 cm² closed by a polyethylene film 0.025 mm thick is capable of preferential venting of hydrogen as required from a 40 ampere hour control battery in ordinary automotive service.

## Claims

1. Method for producing a sealed lead/sulfuric acid recombinant storage battery comprising a plurality of lead electrodes in a case, a fibrous sheet plate separator which is inert to sulfuric acid electrolyte and of substantially uniform hydrophobicity between adjacent ones of said electrodes, and a body of a sulfuric acid electrolyte absorbed by each of said separators and maintained in contact with each of the adjacent ones of said electrodes, each of said separator sheets consisting essentially of first fibers which are inert to aqueous sulfuric acid electrolyte, and have an absorbency greater than 90 percent relative to aqueous sulfuric acid electrolyte when surfactant free and second fibers which are inert to aqueous sulfuric acid electrolyte and have a given absorbency less than 80 percent relative to sulfuric acid electrolyte when surfactant free, the first and second fibers being present in such proportions that the sheet has an absorbency of from 75 to 95 percent relative to sulfuric acid electrolyte when surfactant free,
characterized in
that the battery is filled with an unmeasured quantity of electrolyte sufficient to cover the electrodes,
that the electrolyte not absorbed by the sheet separators, the plates, and other internal surfaces wetted by the electrolyte is removed and
that finally the case is closed.

2. Method according to claim 1, characterized in that only a portion of the electrolyte that is not absorbed is removed by the step of removing electrolyte from the case, and that the case is closed containing electrolyte that is absorbed by the separator sheets and a sump of electrolyte that is not absorbed.

3. Method according to claim 1, characterized in that all of the electrolyte that is not absorbed by the separator sheets is removed by the step of removing electrolyte from the case, thereafter a small quantity of the electrolyte is introduced into the case and the case is closed containing electrolyte that is absorbed by the separator sheets and a sump of electrolyte that is not absorbed.

4. Method according to claim 1 - 3, characterized in that the case is partially evacuated before the electrolyte is introduced thereinto.

5. Method according to claims 1 - 4, characterized in that it additionally includes a step of forming the battery after the electrolyte is introduced into the case to cover the electrodes and before the electrolyte not absorbed by the sheet separators is removed from the case.

## Patentansprüche

1. Verfahren zur Herstellung einer versiegelten rekombinanten Schwefelsäure-Blei-Speicherbatterie umfassend eine Anzahl von Bleielektroden in einem Gehäuse, eine Fasertafel-Scheidewand, die gegenüber dem Schwefelsäure-Elektrolyten inert ist und von im wesentlichen einheitlicher Hydrophobie zwischen den jeweils nebeneinander liegenden Scheidewänden der besagten Elektroden, und einem Körper eines Schwefelsäure-Elektrolyten, der von jeder der besagten Scheidewände absorbiert und mit jeder der nebeneinander liegenden Elektroden in Kontakt gehalten wird; jede der besagten Tafelscheidewände besteht im wesentlichen aus ersten Fasern, die gegenüber einem wäßrigen Schwefelsäure-Elektrolyten inert sind und ein Absorptionsvermögen von über 90% gegenüber dem wäßrigen Schwefelsäure-Elektrolyten, sofern tensidfrei, aufweisen, und zweiten Fasern, die gegenüber einem wäßrigen Schwefelsäure-Elektrolyten inert sind und ein gegebenes Absorptionsvermögen von weniger als 80% im Verhältnis zu einem Schwefelsäure-Elektrolyten, sofern tensidfrei, aufweisen; dabei sind die ersten und zweiten Fasern in solchen Anteilsverhältnissen vorhanden, daß die Tafel ein Absorptionsvermögen zwischen 75 und 95% im Verhältnis zu dem Schwefelsäure-Elektrolyten aufweist, sofern kein Tensid vorhanden ist;
dadurch gekennzeichnet,
daß die Batterie mit einer nicht bemessenen Menge des Elektrolyten aufgefüllt wird, die ausreicht, die Elektroden zu bedecken;
daß der Elektrolyt, der nicht durch die Tafeltrennwände, die Platten und andere durch den Elektrolyten benetzte Innenflächen absorbiert wird, entfernt wird, und daß schließlich das Gehäuse geschlossen wird.

2. Verfahren gemäß Anspruch 1, dadurch gekennzeichnet, daß nur ein Teil des Elektrolyten, der nicht absorbiert wird, durch die Phase der Entfernung des Elektrolyten aus dem Gehäuse entfernt wird und daß das Gehäuse geschlossen wird und Elektrolyten enthält, der durch die Trennwandtafeln absorbiert wird, sowie einen Elektrolytensumpf, der nicht absorbiert wird.

3. Verfahren gemäß Anspruch 1, dadurch gekennzeichnet, daß der gesamte Elektrolyt, der nicht durch die Scheidewandtafeln absorbiert wird, durch die Phase der Entfernung des Elektrolyten aus dem Gehäuse entfernt wird, wonach eine geringe Menge des Elektrolyten in das Gehäuse eingegeben und das Gehäuse geschlossen wird, wobei es durch die Scheidewandtafeln absorbierten Elektrolyten sowie einen Elektrolytensumpf enthält, der nicht absorbiert wird.

4. Verfahren gemäß Anspruch 1 - 3, dadurch gekennzeichnet, daß das Gehäuse teilweise evakuiert wird, ehe der Elektrolyt eingefüllt wird.

5. Verfahren gemäß den Ansprüchen 1 - 4, dadurch gekennzeichnet, daß es nachdem der Elektrolyt in das Gehäuse zur Bedeckung der Elektroden eingebracht und bevor der nicht absorbierte Elektrolyt aus dem Gehäuse entfernt ist zusätzlich eine Phase der Batterieformung einschließt.

## Revendications

1. Méthode de production d'une batterie de plomb/acide sulfurique scellée et recombinante comportant toute une série d'électrodes de plomb dans un boîtier, un séparateur en matériau fibreux inerte vis-à-vis de l'acide sulfurique utilisé comme électrolyte et présentant une hydrophobie substantiellement uniforme, situé entre lesdites électrodes adjacentes, ainsi qu'un électrolyte à l'acide sulfurique absorbé par chacun desdits séparateurs et maintenu en contact avec chacun de ceux adjacents auxdites électrodes, chacun desdits séparateurs étant essentiellement constitué, premièrement, de fibres inertes par rapport à l'électrolyte d'acide sulfurique aqueux et présentant une absorbance supérieure à 90 pour cent par rapport à l'électrolyte d'acide sulfurique aqueux lorsqu'il ne comporte pas de surfactant, et, deuxièmement, de fibres inertes par rapport à l'électrolyte d'acide sulfurique aqueux et présentant une absorbance donnée inférieure à 80 pour cent par rapport à l'électrolyte d'acide sulfurique lorsqu'il ne comporte pas de surfactant, le premier et le second type de fibres étant présents dans des proportions telles que le séparateur présente une absorbance de 75 à 95 pour cent par rapport à l'électrolyte d'acide sulfurique lorsqu'il ne comporte pas de surfactant.
caractérisée en ce que
la batterie est remplie d'une quantité non mesurée d'électrolyte suffisante pour couvrir les électrodes, en ce que l'électrolyte non absorbé par les séparateurs, les plaques et les autres surfaces internes humidifiées par l'électrolyte est enlevé,
et en ce qu'enfin, le boîtier est fermé.

2. Méthode selon la revendication 1, caractérisée en ce que seule une portion de l'électrolyte non absorbé est retirée du boîtier, et que le boîtier est fermé alors qu'il contient l'électrolyte absorbé par les séparateurs ainsi qu'une quantité d'électrolyte non absorbé.

3. Méthode selon la revendication 1, caractérisée en ce que tout l'électrolyte qui n'est pas absorbé par les séparateurs est enlevé à l'étape d'enlèvement de l'électrolyte du boîtier, et qu'ensuite une petite quantité d'électrolyte est introduite dans le boîtier qui est fermé alors qu'il contient l'électrolyte absorbé par les séparateurs et une quantité d'électrolyte qui n'est pas absorbé.

4. Méthode selon les revendications 1 à 3, caractérisée en ce que le boîtier est partiellement évacué avant que l'électrolyte n'y soit introduit.

5. Méthode selon les revendications 1 à 4, caractérisée en ce qu'elle comporte une étape supplémentaire permettant la formation de la batterie après l'introduction de l'électrolyte dans le boîtier pour couvrir les électrodes et avant que l'électrolyte non absorbé par les séparateurs ne soit retiré du boîtier.
